# EUROPÄISCHE PATENTSCHRIFT

(11) **EP 1 053 616 B1**
(45) Veröffentlichungstag und Bekanntmachung des Hinweises auf die Patenterteilung: **03.02.2010**
(21) Anmeldenummer: 99936397.1
(22) Anmeldetag: 02.06.1999
(51) Int. Cl.: H04L 12/40, B60R 16/02

(54) **BEDÄMPFUNGSSCHALTUNG FÜR ZWEIDRAHT-BUSSYSTEM**
DAMPING CIRCUIT FOR TWO-WIRE BUS SYSTEM
CIRCUIT D'AMORTISSEMENT POUR SYSTEME DE BUS A DEUX FILS

(30) Priorität: 07.12.1998 DE 19856283
(43) Veröffentlichungstag der Anmeldung: 22.11.2000
(73) Patentinhaber: ROBERT BOSCH GMBH, 70442 Stuttgart (DE)
(72) Erfinder: STROEBELE, Hans-Peter, D-70195 Stuttgart (DE); MEISSNER, Wolfgang, D-71665 Vaihingen (DE); GUENTHER, Uwe, D-71154 Nufringen (DE); HILGENBERG, Bernd, D-72760 Reutlingen (DE); REINHARDT, Juergen, D-74080 Heilbronn (DE)
(86) Internationale Anmeldenummer: PCT/DE1999/001629
(87) Internationale Veröffentlichungsnummer: WO 2000/035149

(56) Entgegenhaltungen:
- EP-A- 0 235 648
- DE-A- 4 235 616
- US-A- 4 479 228

## Beschreibung

Die Erfindung betrifft ein Zweidraht-Bussystem zur Verbindung einer Mehrzahl von Teilnehmern (7,8,9) mit wenigstens einer Bedämpfungsschaltung (3,4,5,6) zur Bedämpfung von Leitungsresonanzen in dem Zweidraht-Bussystem gegenüber einem Referenzpotential.

### Stand der Technik

Zur Informationsübertragung zwischen verschiedenen Teilnehmern in einem Kraftfahrzeug sind Zweidraht-Bussysteme oder sogenannte Controller-Area-Networks (CAN) bekannt. Die Hardware eines solchen für hohe Informationsübermittlungsgeschwindigkeiten ausgelegten Zweidraht-Bussystems besteht aus einer Zweidraht-Busleitung, an der mehrere Teilnehmer (Sender/Empfänger) angeschlossen sind. Die beiden Busleitungen sind typischerweise beidseitig zueinander mit 120 Ω abgeschlossen. Die Funktion des Zweidraht-Bussystems liegt darin, daß Informationssignale zwischen den Teilnehmern als Spannungsdifferenz zwischen den beiden Busleitungen übertragen werden, wodurch eine größere Signalsicherheit und geringere Störanfälligkeit erreicht wird. Im Ruhezustand befinden sich beispielsweise beide Busleitungen (C_H,C_L) auf einem Potential von 2,5 Volt. Wird ein die logische "1" repräsentierendes Signal über die Zweidraht-Busleitung geschickt, so wird das Potential der ersten Busleitung C_H beispielsweise auf 3,5 Volt erhöht, während das Potential an der Busleitung C_L auf 1,5 Volt abgesenkt wird. Diese Spannungsdifferenz wird dann an einer Eingangsstufe eines Teilnehmers erfaßt.

Im Falle des Auftretens von HF-Strahlung, beispielsweise durch Mobilfunk oder dergleichen können in der Busleitung oder Teilen davon Resonanzspannungen gegenüber dem Massepotential, im Kraftfahrzeug der Metallkarosserie, auftreten. Derartige Resonanzspannungen treten dann zwar regelmäßig in beiden Busleitungen des Zweidraht-Bussystems auf, so daß das Nutzsignal, welches das Differenzsignal zwischen den beiden Busleitungen ist, hierdurch nicht wesentlich beeinträchtigt wird. Die Resonanzspannungen können jedoch so hoch sein, daß die Eingangsstufe eines Teilnehmers übersteuert wird und daher keine zuverlässige Signalübertragung mehr möglich ist. Weiterhin kann durch Asymmetrien des Bussystems eine Resonanzspannungsstörung auch das Nutzsignal beeinträchtigen.

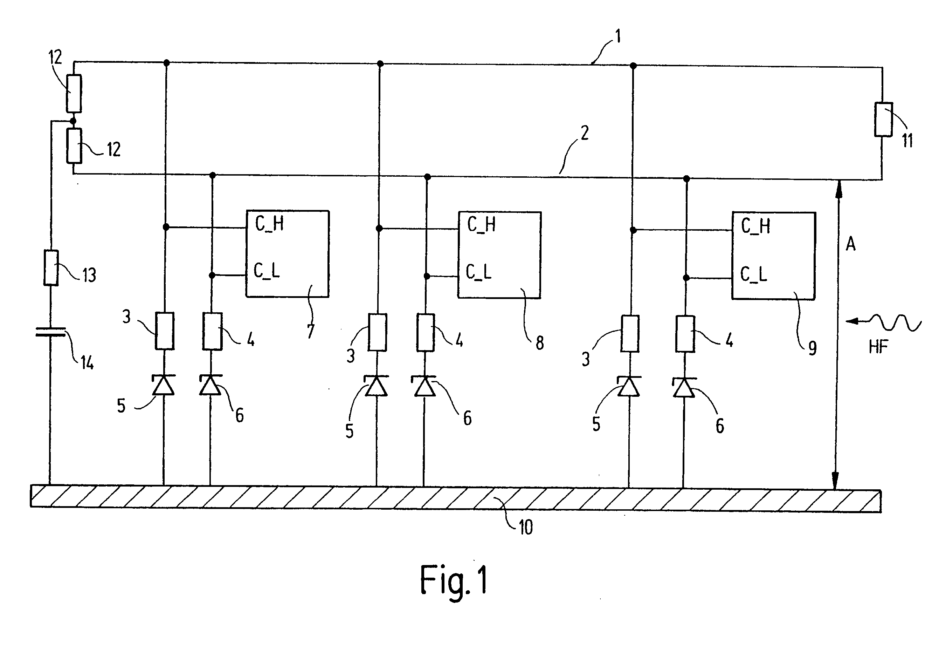

Eine Möglichkeit zur Dämpfung derartiger Resonanzspannungen in einem Zweidraht-Bussystem ist ein Gleichtaktabschluß der beiden Enden des Bussystems (siehe Figur 1 Widerstand 12,13, Kondensator 14), bei dem die Enden der beiden Busleitungen über zwei seriell geschaltete Widerstände von beispielsweise 60 Ω miteinander verbunden sind und der symmetrisch gegenüber den beiden Busleitungen angeordnete Verbindungspunkt der seriellen Widerstände über einen Kondensator (eventuell mit einem weiteren Widerstand in Serie geschaltet) mit Masse verbunden ist. Dadurch werden hochfrequente Resonanzspannungen zur Masse abgeleitet, wobei gleichzeitig der 120 Ω-Abschluß der Enden der beiden Busleitungen beibehalten wird. Ein derartiger Gleichtaktabschluß ist jedoch nur an den beiden Enden der beiden Busleitungen möglich. Ein Gleichtaktabschluß innerhalb der Busleitung oder an einem abgezweigten Ast dieser würde zu unerwünschten Reflexionseffekten in der Busleitung führen.

Eine weitere Möglichkeit, den Empfänger vor Übersteuerung durch HF-Resonanzspannungen zu schützen, besteht durch Einfügen einer Gleichtaktdrossel zwischen den beiden Busleitungs-Eingängen eines Teilnehmers. An beiden Eingängen des Teilnehmers (zur Busleitung C_H und zur Busleitung C_L) ist eine Spule angebracht, welche miteinander gekoppelt sind, so daß die Resonanzspannungen sich gegenseitig aufheben. So zeigt die DE 4235616 A1 einen Übertrager mit zwei Wicklungen und zwei Kondensatoren z. B. als einfache Ringkerndrossel, der den Kern für Gleichtaktwellen kurzschließt. Für Gegentaktspannungen ist der Übertrager in diesem Stand der Technik als Leitungsabschluß einer Zweidrahtleitung hochohmig. Für jeden Teilnehmer eine Gleichtaktdrossel vorzusehen, ist jedoch aufwendig und teuer. Außerdem können die vorgeschalteten Induktivitäten in Verbindung mit in der Teilnehmerschaltung vorhandenen Kapazitäten zu unerwünschten Schwingungen führen.

### Vorteile der Erfindung

Bei einem wie durch Anspruch 1 definierten erfindungsgemäßen Zweidraht-Bussystem ist die Dämpfungscharakteristik der Bedämpfungsschaltung so gewählt, daß die Dämpfung erst oberhalb eines festgelegten Resonanzspannungs-Schwellenwertes wirksam wird. Dadurch wird eine Schwächung des Nutzsignals vermieden. Resonanzspannungen, die oberhalb des Schwellenwertes liegen und eine Übersteuerung der Teilnehmer-Eingangsstufen hervorrufen könnten, werden jedoch gedämpft.

Vorzugsweise besteht die Bedämpfungsschaltung aus einer Serienschaltung eines Widerstandes mit einem spannungsbegrenzenden Element, welche als Serienschaltung zwischen, jeder der beiden Busleitungen des Zweidraht-Bussystems und dem Referenzpotential geschaltet ist. Die Spannungsbegrenzungselemente können so eingestellt werden, daß Spannungen im Bereich der Nutzsignale ungedämpft bleiben, Spannungsspitzen oberhalb eines Spannungsgrenzwertes jedoch über den Widerstand zu Masse abgeleitet werden.

Vorzugsweise sind die spannungsbegrenzenden Elemente so ausgebildet, daß die positive und die negative Halbwelle einer Resonanzschwingung symmetrisch bezüglich einem an der jeweiligen Busleitung anliegenden Normalspannungspotential (vorzugsweise 2, 5V) gedämpft wird. So ist sichergestellt, daß eine Übersteuerung von Teilnehmer-Eingangsstufen sowohl durch positive als auch negative Halbwellen von Resonanzspannungen verhindert werden. Die Grenzspannung der spannungsbegrenzenden Elemente liegt dabei vorzugsweise 3V oberhalb und unterhalb des Normalspannungspegels des Zweidraht-Bussystems.

Die spannungsbegrenzenden Elemente weisen zur Spannungsbegrenzung beispielsweise Zenerdioden auf.

Das Referenzpotential ist zweckmäßigerweise Masse. Das erfindungsgemäße Zweidraht-Bussystem kann beispielsweise zur Informationsübertragung in einem Kraftfahrzeug ausgebildet sein.

Gemäß einer vorteilhaften Weiterbildung der Erfindung ist jedem an dem Zweidraht-Bussystem angeschlossenen Teilnehmer eine Bedämpfungsschaltung zugeordnet. Dadurch können auch lokal, beispielsweise an Stichabschnitten der Busleitung auftretende Resonanzspannungen sicher gedämpft werden. Da Nutzsignale nicht geschwächt werden, bedeutet eine Vielzahl von Bedämpfungsschaltungen keine Verschlechterung der Signalübertragung in dem Zweidraht-Bussystem. Vorzugsweise stellt die einem Teilnehmer zugeordnete Bedämpfungsschaltung einen Bestandteil einer integrierten Schaltung dar, wodurch die Herstellungskosten minimiert werden.

### Figuren

Im folgenden wird die Erfindung anhand eines bevorzugten Ausführungsbeispiels unter Bezugnahme auf die beiliegenden Zeichnungen im Detail erläutert, in denen
Figur 1 ein Schaltbild des erfindungsgemäßen Zweidraht-Bussystems zeigt; und
Figur 2 eine schematische Darstellung einer Strom-Spannungs-Kennlinie des erfindungsgemäßen Zweidraht-Bussystems ist.

Figur 1 zeigt ein erfindungsgemäßes Bussystem mit einer Zweidraht-Busleitung 1,2, die endseitig durch Abschlußwiderstände 11,12 mit beispielsweise 120 Ohm abgeschlossen sind. An die Zweidraht-Busleitung 1,2 sind Teilnehmer 7,8,9 angeschlossen, zwischen denen Informationen übertragen werden. Jeder Teilnehmer kann sowohl als Sender als auch als Empfänger arbeiten. Es kann eine beliebige Zahl von Teilnehmern an dem Bussystem angeschlossen werden. Desweiteren ist das Bussystem nicht auf eine rein lineare Konfiguration beschränkt, sondern es können Abzweigungen oder dergleichen vorgesehen sein. Ein (nicht gezeigter) Buscontroller kann zur Steuerung des Bussystems vorgesehen sein. Vorzugsweise dient das Bussystem zur Informationsübertragung in einem Kraftfahrzeug. Die Information wird dabei als Differenzsignal zwischen den beiden Busleitungen C_H und C_L übertragen. Der normale Spannungspegel beider Busleitungen 1,2 kann beispielsweise 2,5 Volt betragen. Soll als Signal eine logische "1" übertragen werden, so wird die Spannung an dem jeweiligen sendenden Teilnehmer am Anschluß C_H auf 3,5 Volt heraufgesetzt und symmetrisch dazu die Spannung am anderen Anschluß C_L auf 1,5 Volt heruntergeregelt.

Zur Dämpfung von durch Hochfrequenz-Einstrahlung erzeugten Leitungsresonanzen, die hier durch A schematisch dargestellt sind, ist jedem der Teilnehmer 7,8,9 eine Bedämpfungsschaltung 3,4,5,6 zugeordnet. Diese besteht jeweils aus einer Serienschaltung eines Widerstandes 3,4 mit einem spannungsbegrenzenden Element 5,6, welche Serienschaltung zwischen jedem der beiden Eingänge C_H und C_L eines Teilnehmers und Masse 10 geschaltet ist. Das spannungsbegrenzende Element 5,6 ist so ausgebildet, daß die Verbindung zur Masse erst oberhalb beziehungsweise unterhalb festgelegter Spannungsgrenzwerte freigeschaltet ist. In diesem Fall kann die auftretende Resonanzspannung über den Widerstand 3,4 zur Masse hin abfließen. Spannungen, die innerhalb des durch den oberen und unteren Grenzwert definierten Bereiches liegen, werden so nicht gedämpft. Dadurch werden die bei dem Betrieb des Zweidraht-Bussystems verwendeten gewöhnlichen Signalspannungen nicht gedämpft. Auch eine große Anzahl von Bedämpfungsschaltungen beeinträchtigt daher die Signalqualität nicht.

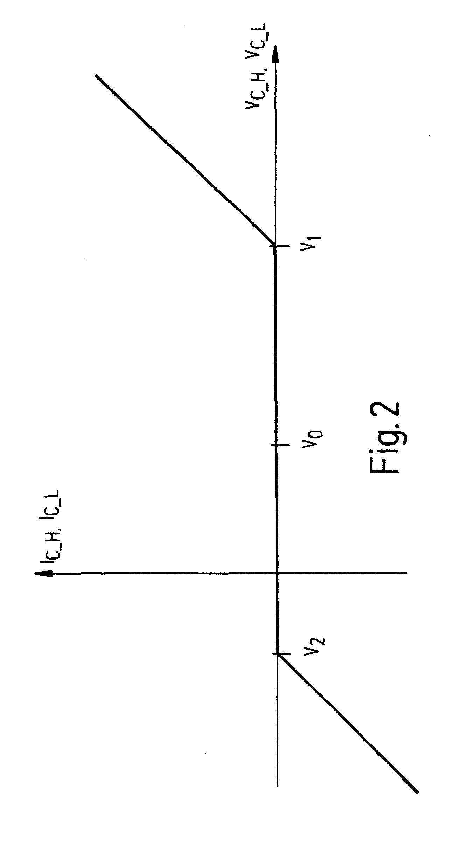

Vorzugsweise ist das spannungsbegrenzende Element 5,6 jeweils so ausgebildet, daß die positive und negative Halbwelle einer Resonanzschwingung symmetrisch bezüglich einem an der Busleitung anliegenden Normalspannungspegel gedämpft wird. Diese Funktionsweise ist in Figur 2 schematisch illustriert. Der Normalspannungspegel sei V₀ (beispielsweise 2,5 Volt). Das jeweilige spannungsbegrenzende Element ist so gewählt, daß Spannungen innerhalb des Bereiches zwischen V₁ und V₂ nicht bedämpft werden, während Spannungen oberhalb V₁ und Spannungen unterhalb V₂ durch einen Stromfluß gegenüber Masse bedämpft werden. Die Steigung dieser Abschnitte der Strom-Spannungs-Kennlinie in Figur 2 wird durch den jeweiligen Widerstand 3,4 bestimmt. Die Grenzspannungen V₁ und V₂ sind vorzugsweise so gewählt, daß die Signalspannungen des Zweidraht-Bussystems innerhalb des horizontalen Kennlinienbereichs zwischen den Spannungswerten V₁ und V₂ liegen, eine Übersteuerung der Teilnehmer-Eingangsstufen jedoch erst deutlich oberhalb von V₁ oder unterhalb von V₂ auftreten würde. Vorzugsweise ist in der Nähe jedes Teilnehmers des Zweidraht-Bussystems eine solche Bedämpfungsschaltung vorgesehen. Aufgrund der beschriebenen Dämpfungscharakteristik wird die Bedämpfungsschaltung nur bei denjenigen Teilnehmern aktiv, bei denen auch eine große Resonanzspannung auftritt. Dadurch wird das Nutzsignal auch nur bei wenigen Teilnehmern geschwächt, so daß weiterhin eine sichere Signalübertragung möglich ist.

Bei dem in Figur 1 illustrierten Zweidraht-Bussystem ist am linken Ende der Zweidrahtbusleitung 1,2 zusätzlich ein Gleichtaktabschluß bestehend aus zwei Abschlußwiderständen 12 mit gleichem Widerstandswert vorgesehen, die am Verbindungspunkt über einen weiteren Widerstand 13 und einen Kondensator 14 an Masse angeschlossen sind. Ein derartiger Gleichtaktabschluß kann jedoch, wie oben erläutert, nur an den Enden der Zweidraht-Busleitung angeschlossen werden.

## Patentansprüche

1. Zweidraht-Bussystem zur Verbindung einer Mehrzahl von Teilnehmern (7,8,9) mit wenigstens einer Bedämpfungsschaltung (3,4,5,6) zur Bedämpfung von Leitungsresonanzen in dem Zweidraht-Bussystem gegenüber einem Referenzpotential (10), **dadurch gekennzeichnet, daß** die Dämpfungscharakteristik der Bedämpfungsschaltung (3,4,5,6) so gewählt ist, daß die Dämpfung erst oberhalb eines Resonanzspannungs-Schwellenwertes Vₛ wirksam wird, indem in Serie zur Dämpfung (3, 4) ein spannungsbegrenzendes Element (5, 6) in der Bedämpfungsschaltung (3, 4, 5, 6) vorgesehen ist.

2. Zweidraht-Bussystem nach Anspruch 1, **dadurch gekennzeichnet, daß** die Bedämpfungsschaltung jeweils aus einer Serienschaltung eines Widerstandes (3,4) mit einem spannungsbegrenzenden Element (5,6) besteht, welche als Serienschaltung zwischen jeder der beiden Busleitungen (1,2) des Bussystems und dem Referenzpotential (10) geschaltet ist.

3. Zweidraht-Bussystem nach Anspruch 2, **dadurch gekennzeichnet, daß** die spannungsbegrenzenden Elemente (5,6) die positive und negative Halbwelle einer Resonanzschwingung symmetrisch bezüglich einem an der jeweiligen Busleitung (1,2) anliegenden Normalspannungspegel dämpft.

4. Zweidraht-Bussystem nach Anspruch 2 oder 3, **dadurch gekennzeichnet, daß** das spannungsbegrenzende Element (5,6) eine Zehnerdiode aufweist.

5. Zweidraht-Bussystem nach einem der Ansprüche 3 oder 4, **dadurch gekennzeichnet, daß** die spannungsbegrenzenden Elemente (5,6) eine Grenzspannung aufweisen, die um ungefähr 3V oberhalb des Normalspannungspegels im Falle einer positiven Halbwelle und um ungefähr 3V unterhalb des Normalspannungspegels im Falle einer negativen Halbwelle liegt.

6. Zweidraht-Bussystem nach einem der Ansprüche 1 bis 5, **dadurch gekennzeichnet, daß** das Referenzpotential (10) Masse ist.

7. Zweidraht-Bussystem nach einem der Ansprüche 1 bis 5, **dadurch gekennzeichnet, daß** das Zweidraht-Bussystem zur Informationsübertragung in einem Kraftfahrzeug ausgebildet ist.

8. Zweidraht-Bussystem nach einem der Ansprüche 1 bis 7, **dadurch gekennzeichnet, daß** jedem an dem Bussystem angeschlossenen Teilnehmer (7,8,9) eine Bedämpfungsschaltung (3,4,5,6) zugeordnet ist.

9. Zweidraht-Bussystem nach einem der Ansprüche 1 bis 8, **dadurch gekennzeichnet, daß** die einem Teilnehmer (7,8,9) zugeordnete Bedämpfungsschaltung (3,4,5,6) Bestandteil, einer integrierten Schaltung ist.

## Claims

1. Two-wire bus system for connecting a plurality of subscribers (7, 8, 9) to at least one damping circuit (3, 4, 5, 6) for damping line resonances in the two-wire bus system with respect to a reference potential (10), **characterized in that** the damping characteristic of the damping circuit (3, 4, 5, 6) is selected in such a manner that the damping becomes effective only above a resonant voltage threshold value Vₛ by virtue of a voltage-limiting element (5, 6) being provided in the damping circuit (3, 4, 5, 6) in series with the damping (3, 4).

2. Two-wire bus system according to Claim 1, **characterized in that** the damping circuit respectively comprises a series circuit which comprises a resistor (3, 4) and a voltage-limiting element (5, 6) and is connected as a series circuit between each of the two bus lines (1, 2) of the bus system and the reference potential (10).

3. Two-wire bus system according to Claim 2, **characterized in that** the voltage-limiting elements (5, 6) damp the positive and negative half-cycles of a resonant oscillation in a symmetrical manner with respect to a normal voltage level applied to the respective bus line (1, 2).

4. Two-wire bus system according to Claim 2 or 3, **characterized in that** the voltage-limiting element (5, 6) has a zener diode.

5. Two-wire bus system according to either of Claims 3 and 4, **characterized in that** the voltage-limiting elements (5, 6) have a limiting voltage which is approximately 3 V above the normal voltage level in the case of a positive half-cycle and is approximately 3 V below the normal voltage level in the case of a negative half-cycle.

6. Two-wire bus system according to one of Claims 1 to 5, **characterized in that** the reference potential (10) is earth.

7. Two-wire bus system according to one of Claims 1 to 5, **characterized in that** the two-wire bus system is designed to transmit information in a motor vehicle.

8. Two-wire bus system according to one of Claims 1 to 7, **characterized in that** a damping circuit (3, 4, 5, 6) is assigned to each subscriber (7, 8, 9) connected to the bus system.

9. Two-wire bus system according to one of Claims 1 to 8, **characterized in that** the damping circuit (3, 4, 5, 6) assigned to a subscriber (7, 8, 9) is part of an integrated circuit.

## Revendications

1. Système de bus à deux fils destiné à relier plusieurs abonnés (7, 8, 9) à au moins un circuit d'amortissement (3, 4, 5, 6) qui amortit les résonances des conducteurs du système de bus à deux fils par rapport à un potentiel de référence (10), **caractérisé en ce que**
la caractéristique d'amortissement du circuit d'amortissement (3, 4, 5, 6) est sélectionnée de telle sorte que l'amortissement n'est actif qu'à partir d'une valeur de seuil Vₛ de la tension de résonance, en prévoyant dans le circuit d'amortissement (3, 4, 5, 6) un élément limiteur de tension (5, 6) en série sur l'amortissement (3, 4).

2. Système de bus à deux fils selon la revendication 1, **caractérisé en ce que** le circuit d'amortissement est constitué du raccordement en série d'une résistance (3, 4) et d'un élément limiteur de tension (5, 6) raccordé en série entre chacun des deux conducteurs de bus (1, 2) du système de bus et le potentiel de référence (10).

3. Système de bus à deux fils selon la revendication 2, **caractérisé en ce que** les éléments limiteurs de tension (5, 6) amortissent la demi-onde positive et la demi-onde négative d'une oscillation de résonance symétrique par rapport à un niveau normal de tension appliqué sur chaque conducteur de bus (1, 2).

4. Système de bus à deux fils selon les revendications 2 ou 3, **caractérisé en ce que** l'élément limiteur de tension (5, 6) présente une diode Zener.

5. Système de bus à deux fils selon l'une des revendications 3 ou 4, **caractérisé en ce que** les éléments limiteurs de tension (5, 6) présentent une tension limite située environ à 3 V au dessus du niveau de tension normale dans le cas d'une demi-onde positive et à environ 3 V en dessous du niveau de tension normale dans le cas d'une demi-onde négative.

6. Système de bus à deux fils selon l'une des revendications 1 à 5, **caractérisé en ce que** le potentiel de référence (10) est la masse.

7. Système de bus à deux fils selon l'une des revendications 1 à 5, **caractérisé en ce que** le système de bus à deux fils est configuré pour transmettre des informations dans un véhicule automobile.

8. Système de bus à deux fils selon l'une des revendications 1 à 7, **caractérisé en ce qu'**un circuit d'amortissement (3, 4, 5, 6) est associé à chaque abonné (7, 8, 9) raccordé au système de bus.

9. Système de bus à deux fils selon l'une des revendications 1 à 8, **caractérisé en ce que** le circuit d'amortissement (3, 4, 5, 6) associé à un abonné (7, 8, 9) fait partie d'un circuit intégré.
